# EUROPEAN PATENT APPLICATION

(11) **EP 3 486 363 A1**
(43) Date of publication of application: **22.05.2019**
(21) Application number: 17201956.4
(22) Date of filing: 15.11.2017
(51) Int. Cl.: D06F 39/02, D06F 33/02, G01F 23/00, G01F 23/22

(54) **WASHING MACHINE**

(71) Applicant: Vestel Elektronik Sanayi ve Ticaret A.S., 45030 Manisa (TR)
(72) Inventor: BÍLGÍÇ,, Sergen, 45030 Manisa (TR)
(74) Representative: Roberts, David

(57) **Abstract**

There is disclosed a washing machine (100) comprising a dispenser (212) for holding and dispensing a washing additive (250). The washing machine comprises a sensor arrangement (240), the sensor arrangement (240) comprising a first conductive element (241) and a second conductive element (243). The first conductive element (241) is movable relative to the second conductive element (243). The first conductive element (241) and the second conductive element (243) are arranged to form an electrical circuit when the first conductive element (241) and the second conductive element (243) are in contact with the washing additive (250) in the dispenser (212). A controller (230) is in communication with the sensor arrangement (240). The controller (230) is configured to determine a quantity of washing additive (250) remaining in the dispenser (212) based on determined position information of the first conductive element (241) and determined information of electrical current and/or voltage in the circuit.

## Description

### Technical Field

The present disclosure relates to a washing machine.

### Background

Washing machines are used for washing washable items, including garments such as clothes. Typically a user can select a suitable washing cycle via an interface on a front face of the washing machine. The interface usually includes a number of control knobs and/or buttons. Some washing machines have both washing and drying functionality. Such machines may be known as washer-dryers.

### Summary

According to a first aspect disclosed herein, there is provided a washing machine comprising: a dispenser for holding and dispensing a washing additive; a sensor arrangement, the sensor arrangement comprising a first conductive element and a second conductive element, the first conductive element being movable relative to the second conductive element, and the first conductive element and the second conductive element arranged to form an electrical circuit when the first conductive element and the second conductive element are in contact with the washing additive in the dispenser; and a controller in communication with the sensor arrangement, the controller configured to determine a quantity of washing additive remaining in the dispenser based on determined position information of the first conductive element and determined information of electrical current and/or voltage in the circuit.

According to an example, the first conductive element is connected to a motor via a shaft, the controller configured to determine the position information of the first conductive element based on a detected number of rotations of the shaft.

According to an example, the second conductive element is fixed to a base of the dispenser.

According to an example, the position information of the first conductive element comprises information of a distance moved by the first conductive element from the second conductive element.

According to an example, the information of electrical current and/or voltage in the circuit comprises information of when the electrical current and/or voltage meets a threshold condition.

According to an example, the threshold condition comprises an electrical current of zero amperes and/or a voltage of zero volts.

According to an example, the dispenser comprises a dosage dispenser constructed and arranged to hold a liquid additive.

In a second aspect there is provided a method in a controller of a washing machine comprising: obtaining position information of a first conductive element in a washing additive dispenser of the washing machine; and obtaining information of an electrical current and/or voltage in an electrical circuit comprising the first conductive element, a second conductive element and a washing additive in the dispenser; and detecting a quantity of washing additive remaining in the dispenser based on the obtained position information and the obtained information of an electrical current.

According to an example, the position information of the first conductive element is obtained by detecting a number of rotations of a motor shaft to which the first conductive element is connected.

According to an example, the position information of the first conductive element comprises information of a distance moved by the first conductive element from the second conductive element.

According to an example, the obtaining information of an electrical current and/or voltage in the circuit comprises obtaining information of when the electrical current and/or voltage meet a threshold condition.

According to an example, the threshold condition comprises an electrical current of zero amperes and/or a voltage of zero volts.

According to an example, the method comprises causing the first conductive element to be moved in a first direction towards the second conductive element until the first conductive element contacts the second conductive element, then causing the first conductive element to be moved in a second direction away from the second conductive element until the threshold condition is reached, and recording the position information of the first conductive element when the threshold condition is reached, the recorded position information being indicative of the quantity of washing additive remaining in the dispenser.

According to an example, the method comprises alerting a user when it is determined that the quantity of washing additive remaining is below a threshold amount.

According to an example, the controller is configured to send a request to a vendor for purchase of more washing additive when it is determined that the quantity of washing additive remaining is below a threshold amount.

### Brief Description of the Drawings

To assist understanding of the present disclosure and to show how embodiments may be put into effect, reference is made by way of example to the accompanying drawings in which:
Figure 1 shows schematically a washing machine according to an example.
Figure 2 shows schematically a dispenser according to an example;
Figures 3A to 3C show schematically a dispenser according to an example;
Figure 4 shows schematically a flow chart of a method according to an example.

### Detailed Description

The present disclosure has applicability to clothes washing machines.

When a user places a washable item such as a garment or garments in a washing machine the user typically selects a washing cycle from a variety of available washing cycles. The items may include garments such as clothes. The items may also include bedsheets, pillowcases, shoes etc. Before or during commencement of a washing cycle, one or more washing additives may be added to the drum of the washing machine so as to enhance the wash. The washing additive(s) may comprise, for example, washing detergent and/or fabric softener. The washing additive(s) may be added to the drum via one or more respective dispenser(s). A user replenishes the additive(s) when there is none left in the dispenser(s), or the amount is running low.

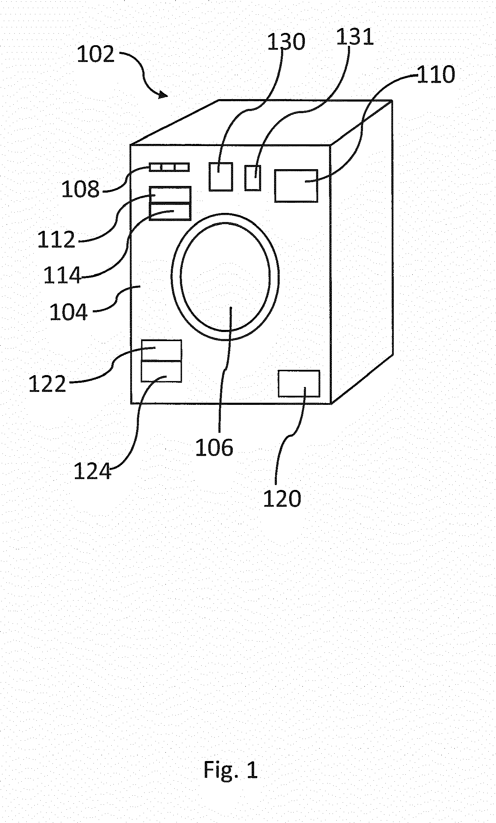

Figure 1 schematically shows a washing machine 102 according to an example. The washing machine 102 comprises a main body portion 104 and a drum 106 which is arranged to hold one or more garments or items of a washing load to be washed.

Before or during a washing cycle, a washing additive may be added for enhancement of the wash. The washing additive may comprise washing detergent. The washing additive may additionally or alternatively include any one or more (or indeed any combination of): fabric softener, soda crystals, limescale remover, water etc. The additive may be in a liquid or a powder form. In examples one or more dispensers or containers are provided for containing such an additive or additives. In the example of Figure 1, a dispenser 112 is provided for receiving washing detergent. Also, in this example a dispenser 114 is provided for receiving fabric softener. In some examples a quantity of the additive(s) are automatically added to the drum 106 before or during a washing cycle. For example water may be passed through or dripped through the dispenser(s) prior to entry of a mixture of the water and additive in to the washing machine drum 106. A mixture of water with an additive, such as detergent, may be referred to as "washing liquor".

In some examples each dispenser is sized for containing a quantity of respective additive sufficient for multiple washes. A controller 130 of the washing machine is configured to meter or dose out an appropriate amount of additive(s) for each wash. Therefore a user only periodically needs to replenish the dispenser(s) with additive i.e. when the additive in question has run out or is running low. Such a dispenser may be referred to as a dosage dispenser.

A user interface 108 is provided which enables a user to select one or more washing and/or drying parameters and/or settings. A display 110 is also provided which outputs information to a user of the washing machine. For example, information displayed on the display 110 may be information regarding options selected via user interface 108, and/or information regarding a washing cycle in progress such as time remaining etc. The display 110 may also provide information to the user regarding a remaining quantity of the additive(s) in the dispensers 112 and 114. This may be for example by means of a visible alarm. The visible alarm may be, for example, a flashing light or the like. The washing machine may also comprise a speaker for providing an audible alarm to the user. For example the audible alarm may indicate the end of a wash, and/or warn the user that the washing machine is running low on one or more additives. The washing machine 102 also comprises the controller shown schematically at 130. The controller 130 is arranged for controlling operations of the washing machine 102.

In the example of Figure 1, the washing machine 102 also comprises a communication module or communication unit 131. The communication module 131 is communicatively connected to controller 130. The communication module 131 enables the washing machine 102 to communicate with one or more separate devices. For example the communication module 131 may enable the washing machine 102 to communicate with a computer or user device separate from the washing machine 102. In some examples, this enables a user to control the washing machine 102 remotely e.g. via their mobile phone. Additionally or alternatively it enables the washing machine 102 to communicate status information of the washing machine to one or more separate devices. The communication module 131 may, for example, be configured for communication via Bluetooth® and/or Wi-Fi communication protocols.

The washing machine 102 also comprises a suitable power connection shown schematically at 120, enabling the washing machine 102 to be connected to an electricity supply such as mains electricity. The washing machine 102 also comprises a suitable water inlet shown schematically at 122, and a suitable water outlet shown schematically at 124. The water inlet 122 and water outlet 124 may for example enable connection to a mains water supply.

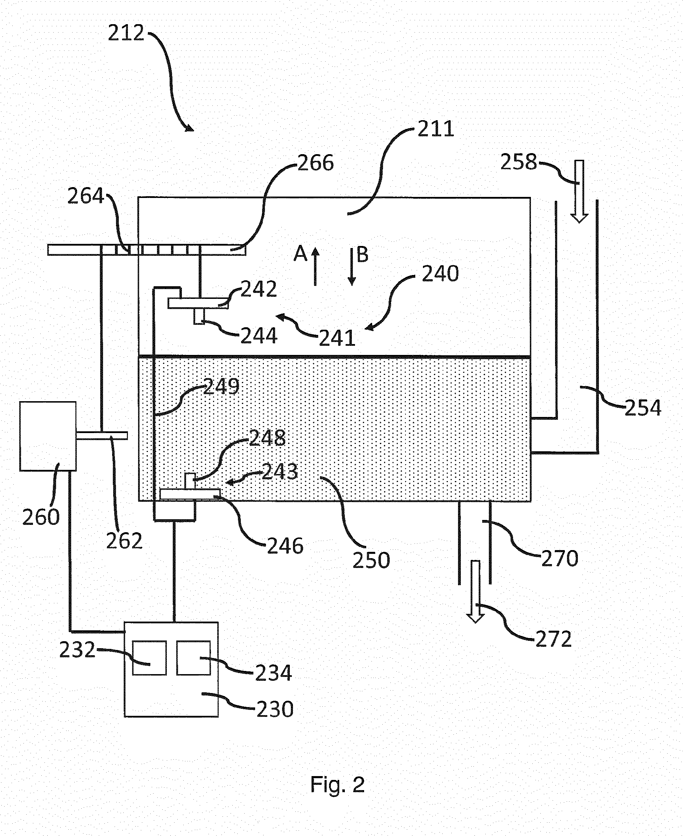

Figure 2 schematically shows a dispenser 212 according to an example. The dispenser 212 comprises a container or storage portion 211 for containing an additive 250. The additive may be, for example, liquid detergent. The additive 250 may be poured in to the container portion 211 via inlet 254, as schematically shown by arrow 258. The additive 250 may be dosed or metered out of the container portion 211 (e.g. in to a drum of the washing machine) via outlet 270, as schematically shown by arrow 272.

A sensor arrangement is schematically shown at 240. The sensor arrangement is configured and arranged for sensing a quantity or level of the additive 250 in the dispenser 212. The sensor arrangement 240 comprises a first conductive element 241 and a second conductive element 243. The conductive elements 241 and 243 may comprise, for example, a metal. In this example the first conductive element 241 comprises a portion 242 to which a conductive pin 244 is attached. Likewise, in this example the second conductive element 243 comprises a portion 246 to which a conductive pin 248 is attached. The first conductive element 241 and second conductive element 243 are movable relative to each other. In the example of Figure 2 the first conductive element 241 is movable, whilst the second conductive element 243 is fixed. For example the second conductive element 243 may be fixed to a base or floor of the container 211. First conductive element 241 is connected to motor 260. In this example a cable or wire 264 connects the first conductive element 241 to the motor 260. In this example the wire can be caused to be wrapped/unwrapped from motor shaft 262 and second or intermediate shaft 266 by rotation of the motor shaft 262, so as to effect movement of the first conductive element 241 in dispenser 212. For example, as the motor is driven in a first direction the cable 264 is unwound from the shaft 266 and the first conductive element 243 may move vertically downwards in container 211, as represented by arrow B. As the motor is driven in a second direction which is opposite or reverse from the first motor direction, then the cable 264 is wrapped on to the shaft 264 and the first conductive element 241 moves vertically upwards in container 211, as represented by arrow A. In some examples intermediate shaft 266 is omitted such that the cable is wound/unwound only from motor shaft 262 to cause movement of the first conductive element 241.

The first conductive element 241 and second conductive element 243 are arranged in a circuit, as schematically represented by line 249. The additive 250, which has at least some level of conductivity, can complete the circuit. The conductivity of the additive 250 may be dependent on its density, for example. Therefore different additives may have different electrical conductivity parameters. For example if both pins 244 and 244 are in contact with additive 250 a current will flow in the circuit. This current (and/or a voltage) in the circuit can be measured and used by controller 230 to detect a quantity of the additive 250 in the dispenser 212 as will be explained in more detail below. To this end the controller 230 may comprise or be in communication with a voltmeter and/or an ammeter. The electrical current may be supplied to the circuit via mains electricity.

The controller 230 comprises a memory 232 and a memory 234. The controller 230 is also operable to control motor 260, and to receive information from motor 260. For example the controller can receive information from motor 260 such as a number of rotations of shaft 262. The controller can also receive information of which direction the shaft 262 is rotating. From this, the controller 230 can obtain information of a distance moved by first conductive element 241 and in which direction (e.g. upwards or downwards in container 211) it is moving. The controller can, for example, determine a position of the first conductive element 241 by monitoring how far the first conductive element 241 has moved by counting a number of rotations of shaft 262 to which conductive element 241 is attached via cable 264. Knowing a diameter (or circumference) of the shaft 262 it can be determined how much of cable 264 has been wound or unwound from shaft 262 following rotation thereof, and accordingly how far first conductive element 241 has travelled and in which direction.

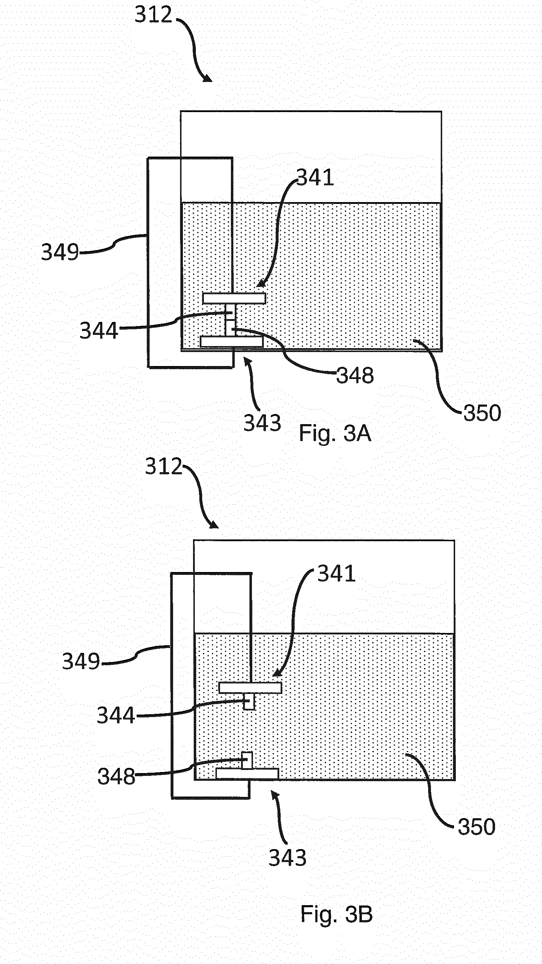

Figures 3A to 3C schematically show various relative positions of first conductive element 341, second conductive element 343, and additive 350.

In Figure 3A the first conductive element 341 has been driven down to the second conductive element 343 so that conductive pins 344 and 348 are in contact. In this situation a relatively high current flows (or relatively high voltage is present) in the circuit 349 due to strong conductive connection between pins 344 and 348. This may be considered a reference current and/or voltage. This may also be considered a reference position of the first conductive element 341.

In Figure 3B the first conductive element 341 is spaced from the second conductive element 343. However the first conductive element 341 (or at least its pin 344) is in or in contact with the additive 350. The additive acts as an electrical conductor (for example with capacitive effect) and therefore a circuit 349 is present or formed between first conductive element 341 and second conductive element 343. The conductivity provided by the additive 350 in Figure 3B may be less than the conductivity provided by the direct connection between pins 344 and 348 in Figure 3A. Therefore a monitored current and/or voltage in the circuit of Figure 3B may be less than a monitored current and/or voltage in the circuit of Figure 3A.

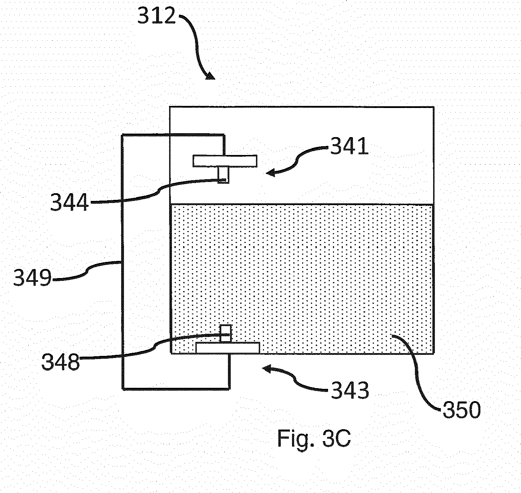

In Figure 3C the first conductive element 341 has been driven or moved up to a height or position such that the first conductive element 341 (and its conductive pin 344) is clear of and spaced from the additive 350. Accordingly the circuit 349 is broken. Therefore in such an example the current and/or voltage in the circuit 349 may be zero.

The controller can therefore obtain information of a position of the first conductive element when the first conductive element is no longer in contact with the additive, i.e. the point at which the circuit is broken. Using this information the controller can determine an amount of additive remaining in the dispenser. Or in other words the controller is configured to determine a quantity of washing additive remaining in the dispenser based on information of a position of the first conductive element and information of electrical current and/or voltage in the circuit.

The position information of the first conductive element may be a distance from a reference position. The reference position may, in some examples, be a position of the first conductive element when it is in contact with the second conductive element, for example as shown in Figure 3A. By way of example, if the distance or displacement from the reference point is 5cm when the first conductive element is no longer in contact with the washing additive, then this may indicate 50ml of washing additive remaining, 10cm may indicate 100ml remaining etc.

According to some examples a position at which the first conductive element 341 can go no higher in the dispenser may be considered a maximum reference point. If the first conductive element reaches the maximum reference point and is still in contact with the additive 350, then this may be considered indicative that the dispenser is full of additive 350. According to some examples a maximum movement of the motor 260 is limited. In some examples the maximum movement of the motor is limited so that it stops when the first conductive element 341 reaches the maximum reference point.

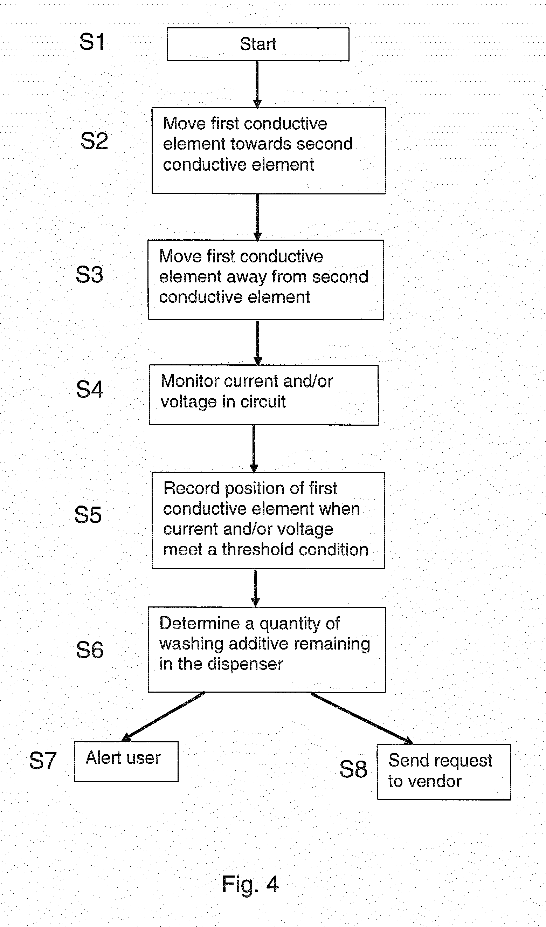

The flow chart of Figure 4 shows an example method, described in relation to Figure 2.

At S1 an operation of detecting a quantity of washing additive remaining in a washing machine dispenser is started.

At S2, motor 260 drives the first conductive element 241 downwards in the direction of arrow B until the first conductive element 241 comes into contact with the second conductive element 243 (e.g. their respective pins 244 and 248 touch).

Once this has occurred and been detected (e.g. by detecting an increase in current and/or voltage in the circuit) the method proceeds to S3, where the motor is driven in a reverse direction so that the first conductive element 241 moves in the direction of arrow B.

As the first conductive element 241 is moved away from the second conductive element 243, a current and/or voltage is monitored in the circuit 249 between the first conductive element 241, second conductive element 243, and additive 250. This is shown at S4. This may alternatively be referred to as measuring or monitoring conductivity.

When the current and/or voltage being monitored meets a threshold condition, a position of the first conductive element 241 is recorded. This may be considered position information. This is shown at S5. The threshold condition may be that the current in the circuit is 0A and/or the voltage in the circuit is 0V i.e. indicative that the first conductive element 241 is no longer in contact with the additive 250 and therefore the circuit between first conductive element 241, second conductive element 243, and additive 250 has been broken.

At S6, the controller 230 uses the position information obtained at S5 to detect or determine a quantity of washing additive remaining in the dispenser 212.

When it is determined that the quantity of additive remaining is below a threshold amount (for example 25ml), then in some examples a warning may be provided to the user so as to remind the user to replenish the dispenser 212 with more additive. This is shown at S7. The warning may be a visible alarm such as a flashing light, and/or an audible warning such as a buzzer.

Additionally or alternatively, when it is determined that the quantity of additive remaining is below a threshold amount (for example 25ml), then in some examples the controller is configured to cause a request to be sent to a vendor or retailer for purchasing more of the washing additive. This is shown at S8. For example such a request may be sent via communication module 131 shown in Figure 1.

The present disclosure provides a sensing arrangement which can accurately monitor a quantity of an additive remaining in a dispenser of a washing machine. By comparing values of conductivity (e.g. current and/or voltage) as the first conductive element moves through, and ultimately exits, the additive then the conductivity values obtained are compared for the additive in question at that time. Accordingly the sensing arrangement can cope with different additives being used in the dispenser since it is not necessarily reliant on storing conductivity values for specific types of additives. Thus in some examples the sensing arrangement can operate independently and without knowledge of the type of additive in question.

Features in Figures which have the same reference number albeit 100 series higher (e.g. dispenser 112, 212, 312) may be considered equivalent, and features shown in different Figures and examples may be combined.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data, such as memory. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A washing machine comprising:
a dispenser for holding and dispensing a washing additive;
a sensor arrangement, the sensor arrangement comprising a first conductive element and a second conductive element, the first conductive element being movable relative to the second conductive element, and the first conductive element and the second conductive element arranged to form an electrical circuit when the first conductive element and the second conductive element are in contact with the washing additive in the dispenser; and
a controller in communication with the sensor arrangement, the controller configured to determine a quantity of washing additive remaining in the dispenser based on determined position information of the first conductive element and determined information of electrical current and/or voltage in the circuit.

2. A washing machine according to claim 1, the first conductive element being connected to a motor via a shaft, the controller configured to determine the position information of the first conductive element based on a detected number of rotations of the shaft.

3. A washing machine according to claim 1 or claim 2, the second conductive element being fixed to a base of the dispenser.

4. A washing machine according to any of claims 1 to 3, the position information of the first conductive element being information of a distance moved by the first conductive element from the second conductive element.

5. A washing machine according to any of claims 1 to 4, the information of electrical current and/or voltage in the circuit comprising information of when the electrical current and/or voltage meets a threshold condition.

6. A washing machine according to claim 5, the threshold condition comprising an electrical current of zero amperes and/or a voltage of zero volts.

7. A washing machine according to any of claims 1 to 6, the dispenser comprising a dosage dispenser constructed and arranged to hold a liquid additive.

8. A method in a controller of a washing machine comprising:
obtaining position information of a first conductive element in a washing additive dispenser of the washing machine; and
obtaining information of an electrical current and/or voltage in an electrical circuit comprising the first conductive element, a second conductive element and a washing additive in the dispenser; and
detecting a quantity of washing additive remaining in the dispenser based on the obtained position information and the obtained information of an electrical current.

9. A method according to claim 8, the position information of the first conductive element being obtained by detecting a number of rotations of a motor shaft to which the first conductive element is connected.

10. A method according to claim 8 or claim 9, the position information of the first conductive element comprising information of a distance moved by the first conductive element from the second conductive element.

11. A method according to any of claims 8 to 10, the obtaining information of an electrical current and/or voltage in the circuit comprising obtaining information of when the electrical current and/or voltage meet a threshold condition.

12. A method according to claim 11, the threshold condition comprising an electrical current of zero amperes and/or a voltage of zero volts.

13. A method according to claim 11 or claim 12, comprising causing the first conductive element to be moved in a first direction towards the second conductive element until the first conductive element contacts the second conductive element, then causing the first conductive element to be moved in a second direction away from the second conductive element until the threshold condition is reached, and recording the position information of the first conductive element when the threshold condition is reached, the recorded position information being indicative of the quantity of washing additive remaining in the dispenser.

14. A method according to any of claims 8 to 13 comprising alerting a user when it is determined that the quantity of washing additive remaining is below a threshold amount.

15. A method according to any of claims 8 to 14, the controller configured to send a request to a vendor for purchase of more washing additive when it is determined that the quantity of washing additive remaining is below a threshold amount.
